# EUROPÄISCHE PATENTSCHRIFT

(11) **EP 2 310 646 B1**
(45) Veröffentlichungstag und Bekanntmachung des Hinweises auf die Patenterteilung: **08.08.2012**
(21) Anmeldenummer: 09769130.7
(22) Anmeldetag: 12.06.2009
(51) Int. Cl.: F01N 11/00, F01N 3/20, B01D 53/90, B01D 53/94, B01D 53/00

(54) **VERFAHREN ZUM BETRIEB EINES HWL-DOSIERSYSTEMS**
METHOD FOR OPERATING A UREA-WATER SOLUTION METERING SYSTEM
PROCÉDÉ POUR FAIRE FONCTIONNER UN SYSTÈME DE DOSAGE D'UNE SOLUTION URÉE-EAU

(30) Priorität: 27.06.2008 DE 102008030756
(43) Veröffentlichungstag der Anmeldung: 20.04.2011
(73) Patentinhaber: Emitec Gesellschaft für Emissionstechnologie mbH, 53797 Lohmar (DE)
(72) Erfinder: HODGSON, Jan, 53840 Troisdorf (DE); KETTERL, Hermann, 94569 Stephansposching (DE)
(74) Vertreter: Rössler, Matthias
(86) Internationale Anmeldenummer: PCT/EP2009/057257
(87) Internationale Veröffentlichungsnummer: WO 2009/156281

(56) Entgegenhaltungen:
- WO-A-00/21881
- WO-A-2006/074833

## Beschreibung

Die vorliegende Erfindung betrifft ein Verfahren zum Betrieb einer Vorrichtung zum Bereitstellen eines flüssigen Reaktionsmittels, insbesondere flüssiger Harnstoff-Wasser-Lösung (HWL), zu einem Abgassystem, wobei die Vorrichtung zumindest einen Tank und eine Einspritzdüse aufweist, die über eine Leitung miteinander verbunden sind. Die Leitung umfasst zudem eine Pumpe zur Förderung des Reaktionsmittels und außerdem ist zwischen der Pumpe und der Einspritzdüse ausgehend von der Leitung hin zum Tank eine regelbare Rückführung vorgesehen. Die Erfindung findet insbesondere Anwendung bei einem solchen Dosiersystem, das bei Kraftfahrzeugen vorgesehen ist.

Bei der Reinigung von Abgasen mobiler Verbrennungskraftmaschinen, wie insbesondere Dieselmotoren, ist es bekannt, zur Reduktion der im Abgas enthaltenden Stickoxide katalytische Konverter zur selektiven katalytischen Reaktion zur Verfügung zu stellen (SCR). An diesem katalytischen Konverter, der regelmäßig einen wabenförmigen Katalysator-Trägerkörper mit einer entsprechenden katalytisch aktiven Beschichtung umfasst, reagieren die im Abgas enthaltenen Stickoxide und werden zu elementarem Stickstoff reduziert. Dieser Prozess kann insbesondere dadurch motiviert werden, dass dem Abgas ein Reaktionsmittel bzw. Reduktionsmittel (wie beispielsweise Harnstoff und/oder Ammoniak) zugegeben wird. Für den Fall, dass Harnstoff in das Abgassystem eingeleitet wird, kann dieses in Folge des Kontaktes mit dem heißen Abgas direkt pyrolisieren und damit das gewünschte Ammoniak-Gas erzeugen. Es ist aber auch möglich, dass der Harnstoff über einen Katalysator zur Hydrolyse des Harnstoffs geführt wird, so dass eine Umwandlung des Harnstoffs hin zum Ammoniak katalytisch motiviert stattfindet. Der so bereitgestellt Ammoniak strömt dann zusammen mit dem Abgas gut durchmischt in den SCR-Katalysator-Trägerkörper.

Aus dem vorher beschriebenen Verfahren geht hervor, dass die Zugabemenge des Reduktionsmittels bzw. Reaktionsmittels genau abgestimmt auf die aktuelle Situation erfolgen sollte. So sind insbesondere die im Abgas gerade vorliegenden Schadstoffe zu berücksichtigen ebenso wie die Reaktionsfreudigkeit des SCR-Katalysators. Außerdem ist auch zu vermeiden, dass zuwenig Reaktionsmittel zugegeben wird, so dass die gewünschte Umsetzung der Abgasschadstoffe nicht im erforderlichen Umfang stattfindet. Auch die Zugabe einer zu großen Menge des Reaktionsmittels ist nicht gewünscht, weil dieses dann ebenfalls unverändert den SCR-Katalysator durchströmen kann, demnach die Gefahr besteht, dass dieses Reaktionsmittel an die Umgebung abgegeben wird. Aus diesem Grund sind Maßnahmen gewünscht, die eine exakte Zudosierung einer vorbestimmten Menge des Reaktionsmittels zum gewünschten Zeitpunkt gewährleisten.

Bei der hier beschriebenen Vorrichtung wird mittels der Pumpe in der (flexiblen) Leitung ein Reaktionsmittel-Reservoir gebildet, das insbesondere unter erhöhtem Druck steht, beispielsweise mehr als 3 bar oder sogar mindestens 7 bar bzw. 10 bar. Zum gewünschten Zeitpunkt wird dann die Einspritzdüse geöffnet, wobei sich die Einspritzmenge dann aus der Öffnungszeit der Einspritzdüse und dem Druck in der Leitung bestimmt. Daraus lässt sich erkennen, dass dieses recht einfach aufgebaute System gleichwohl sensibel auf Einschlüsse, Verunreinigungen und sonstige Störgrößen in der Förderleitung ist.

Aus der WO 2006/074833 A1 ist ein Verfahren zum Nachbehandeln von Abgasen einer Brennkraftmaschine unter Verwendung eines in das Abgas einzubringenden Reaktionsmittels bekannt. Dabei soll das Einfrieren des Reaktionsmittels dadurch wirksam verhindert werden, dass die Temperatur des Reaktionsmittels überwacht wird, um gegebenenfalls eine Zirkulation des Reaktionsmittels über eine Rücklaufleitung zu initialisieren.

Aus der WO 00/21881 A1 ist zudem ein Verfahren und eine Vorrichtung zur Verminderung von Stickoxidemissionen bekannt, wobei dort die Qualität, die Temperatur und die Füllmenge der Harnstoff-Wasser-Lösung überwacht wird. Bei bestimmten Randbedingungen kann die Zuführleitung für die Harnstoff-Wasser-Lösung geleert werden, um eine Beschädigung der Vorrichtung durch Einfrieren zu vermeiden.

Hiervon ist es Aufgabe der vorliegenden Erfindung, die mit Bezug auf den Stand der Technik geschilderten Probleme zumindest teilweise zu lösen. Insbesondere soll ein Verfahren angegeben werden, bei dem reproduzierbare Bedingungen in der Leitung hin zur Einspritzdüse gewährleistet sein sollen, und insbesondere bei der Erkennung von Störungen des Systems eine einfache und schnelle Wiederherstellung des gewünschten Systems im Betrieb ermöglicht wird. Insbesondere betrifft dies die Vermeidung bzw. Beseitigung von Gaseinschlüssen oder gefrorenen Teilbereichen des Reaktionsmittels.

Diese Aufgaben werden gelöst mit einem Verfahren gemäß den Merkmalen des Patentanspruchs 1. Besonders bevorzugte Ausführungsvarianten des Verfahrens und Ausgestaltungen eines Kraftfahrzeuges zur Durchführung des Verfahrens sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können, und weitere Ausführungsvarianten der Erfindung aufzeigen. Die Beschreibung, insbesondere im Zusammenhang mit der Figur, erläutert die Erfindung weiter und nennt zusätzliche Ausführungsbeispiele.

Das erfindungsgemäße Verfahren zum Betrieb betrifft eine Vorrichtung zur Bereitstellung eines flüssigen Reaktionsmittels zu einem Abgassystem, die zumindest einen Tank und eine Einspritzdüse, die über eine Leitung miteinander verbunden sind, umfasst, wobei weiter die Leitung eine Pumpe zur Förderung des Reaktionsmittels hat und zwischen der Pumpe und der Einspritzdüse ausgehend von der Leitung hin zum Tank eine regelbare Rückführung vorgesehen ist, ebenso wie eine Steuerung, die den Betrieb der Einspritzdüse, der Pumpe und der Rückführung kontrolliert. Das Verfahren zeichnet sich dadurch aus, dass zeitweise ausschließlich eine Kreisförderung des Reaktionsmittels über die regelbare Rückführung erfolgt.

Hierzu ist anzumerken, dass die Rückführung regelmäßig über ein Ventil mit der Leitung verbunden ist, das zu vorgegebenen Zeitpunkten geöffnet und/oder geschlossen werden kann. Üblicherweise wird die Rückführung dazu eingesetzt, eine Druckentspannung in der Leitung zwischen Einspritzdüse und Pumpe für den Fall zu ermöglichen, wenn das Zugabe-Verfahren beendet wird. Das mittels der Pumpe mit Überdruck in die Leitung hinein geförderte Reaktionsmittel kann dann über die Rückführung in den Tank zurückfließen. Im Ergebnis liegt dann nach Abschalten der Vorrichtung in der Leitung Reaktionsmittel mit einem Druck vor, der im Wesentlichen dem Umgebungsdruck entspricht. Damit wird auch die Möglichkeit eröffnet, dass das Reaktionsmittel im Fall des Einfrierens der Vorrichtung expandieren kann, insbesondere um eine 11 % Volumenzunahme, die bei einer Harnstoff Wasser-Lösung zu erwarten ist.

Hier wird nun die Rückführung für eine zeitweise durchzuführende Kreisförderung genutzt. Damit ist insbesondere gemeint, dass das Ventil geöffnet wird und die Pumpe Reaktionsmittel aus dem Tank hin zur Rückführung und damit wieder zum Tank hin fördert. Ist die Kreisförderung abgeschlossen, wird die Rückführung wieder geschlossen und der Druck vor der Einspritzdüse im gewünschten Umfang wieder aufgebaut, so dass erst dann wieder eine Situation vorliegt, mit der eine kontrollierte Einspritzung ermöglicht wird. Folglich ist in der Phase der Kreisförderung keine Einspritzung vorzunehmen.

Mit der Kreisförderung soll insbesondere erreicht werden, dass sich Gaseinschlüsse, die sich in der Leitung während des Stillstands oder aufgrund ungünstiger Betriebsbedingungen ergeben haben, entfernt werden und/oder dass noch gefrorene Teilbereiche des Reaktionsmittels in der Leitung in Folge des daran vorbeiströmenden Flüssigreaktionsmittels und/oder der Reibung verflüssigt werden. Im Ergebnis ist gewünscht, dass nach dieser Kreisförderung wieder eine im Wesentlichen gleichmäßige Dichte des Reaktionsmittels in der Leitung vorliegt und demnach die gewünschten Druckverhältnisse vor der Einspritzdüse ohne Weiteres eingestellt werden können.

Erfindungsgemäß erfolgt die Kreisförderung des Reaktionsmittels für einen Förderzeitraum, der mindestens dem Doppelten der Förderzeit der Vorrichtung für Reaktionsmittel vom Tank über die regelbare Rückführung bis wieder in den Tank entsprechen. Damit soll zum Ausdruck gebracht werden, dass die Leitung wenigstens zweimal vom frisch aus dem Tank entnommenen Reaktionsmittel durchspült wird.

Weiterhin ist es erfindungsgemäß, dass die Kreisförderung des Reaktionsmittels für einen Förderzeitraum erfolgt, der höchstens dem Fünffachen der Förderzeit der Vorrichtung für Reaktionsmittel vom Tank über die regelbare Rückführung bis wieder in den Tank entspricht. Damit wird insbesondere zum Ausdruck gebracht, dass eine solche Kreisförderung nicht zu häufig erfolgen soll, hier also auf ein fünfmaliges Durchspülen begrenzt wird. Bei einem fünffachen Durchspülen ist in den allermeisten Fällen die Störung behoben und zudem bereits ein relativ großer Zeit- und Energieaufwand aufgewendet worden.

Gemäß einer Weiterbildung des Verfahrens erfolgt eine Initiierung der Kreisförderung des Reaktionsmittels mit Mitteln zur Identifizierung von zumindest Feststoffen oder Gasen im Reaktionsmittel. Die Mittel zur Identifizierung von zumindest Feststoffen oder Gasen umfassen einen Sensor, insbesondere einen Drucksensor, der den Druck in der Leitung bzw. in und/oder unmittelbar vor der Einspritzdüse bestimmen kann. Insbesondere ist hiermit gemeint, dass mit Hilfe dieser Mittel der Druckverlauf während der Einspritzphase überwacht wird und mit einer erwarteten Druckänderung verglichen wird. Wird nun so festgestellt, dass bei einem anliegenden Ausgangsdruck und einer vorgegebenen Öffnungszeit der Einspritzdüse nicht das erwartete Druckniveau erreicht wird, kann das insbesondere darauf hinweisen, dass Gaseinschlüsse und/oder Feststoffe im Reaktionsmittel vorliegen. Demnach wäre dann bei der Identifizierung solcher Feststoffe und/oder Gase im Reaktionsmittel die Kreisförderung zu initiieren, was mittels der Steuerung ohne Weiteres geschehen kann.

Darüber hinaus wird auch als vorteilhaft angesehen, dass die Kreisförderung des Reaktionsmittels mit Mitteln zur Identifizierung einer Tankzustandsgröße bei Betriebsstart initiiert wird. Hiermit sind insbesondere Sensoren gemeint, die den Füllstand im Tank bestimmen können. Die hier beschriebene Vorrichtung ist insbesondere sensibel bei einer Betankung, also dann, wenn neues Reaktionsmittel in den Tank eingeleitet wurde. Gerade hierbei können sich Gaseinschlüsse und ähnliches bilden. Werden also mit den Mitteln zur Identifizierung einer Tankzustandsgröße der Kreisförderung erkannt, dass zuletzt ein Betankungsvorgang stattgefunden hat, wird die Kreisförderung unmittelbar bei Betriebsstart der Vorrichtung eingeleitet.

Das erfindungsgemäße Verfahren zeichnet sich weiter dadurch aus, dass die Kreisförderung des Reaktionsmittels mit einer gegenüber einer Einspritzförderung erhöhten Förderleistung erfolgt. Hiermit ist insbesondere gemeint, dass die Pumpe mit einer erhöhten Fördergeschwindigkeit bzw. Förderfrequenz während der Phase der Kreisförderung arbeitet, als dies während der Phase erfolgt, in der der Förderdruck hin zur geschlossenen Einspritzdüse aufgebaut wird. Die hohe Fördergeschwindigkeit bzw. Förderfrequenz der Pumpe begünstigt ebenfalls das Auflösen von gasförmigen oder festen Einschlüssen im Reaktionsmittel.

Ganz besonders bevorzugt ist das Verfahren, wenn flüssige Harnstoff-Wasser-Lösung gefördert ist. Damit ist insbesondere gemeint, dass flüssige Harnstoff-Wasser-Lösung über die Einspritzdüse in das Abgassystem zugegeben wird. Harnstoff-Wasser-Lösung ist auch unter dem Produktnamen *AdBlue* weitläufig bekannt.

Ganz besonders findet die Erfindung Anwendung bei einem Kraftfahrzeug mit einer Verbrennungskraftmaschine und einem Abgassystem, in dem eine Einspritzdüse für ein flüssiges Reaktionsmittel in Strömungsrichtung des Abgases vor einem SCR-Katalysator angeordnet ist, sowie wenigstens eine Vorrichtung mit zumindest folgenden Komponenten:
- ein Tank für das flüssige Reaktionsmittel,
- eine regelbare Einspritzdüse,
- eine Leitung, die den Tank und die Einspritzdüse miteinander verbindet,
- eine Pumpe zur Förderung des Reaktionsmittels vom Tank hin zur Einspritzdüse,
- eine mit einem Ventil regelbare Rückführleitung, welche die Leitung zwischen der Pumpe und der Einspritzdüse mit dem Tank verbindet,
- eine Steuerung zum kontrollierten Betrieb der Einspritzdüse, der Pumpe und der Rückführung, die eingerichtet zur Durchführung eines Verfahrens der hier erfindungsgemäß beschriebenen Art ist.

Bei dem Kraftfahrzeug handelt es sich insbesondere um ein Nutzfahrzeug, also beispielsweise einen Bus, einen Lastkraftwagen, einen Traktor oder dergleichen. Die Erfindung findet insbesondere bei Verbrennungskraftmaschinen nach Art eines Dieselmotors Anwendung.

Die Erfindung sowie das technische Umfeld werden nachfolgend anhand der Figur näher erläutert. Es ist darauf hinzuweisen, dass die Figur eine besonders bevorzugte Ausführungsvariante der Erfindung betrifft, diese jedoch nicht darauf beschränkt ist.

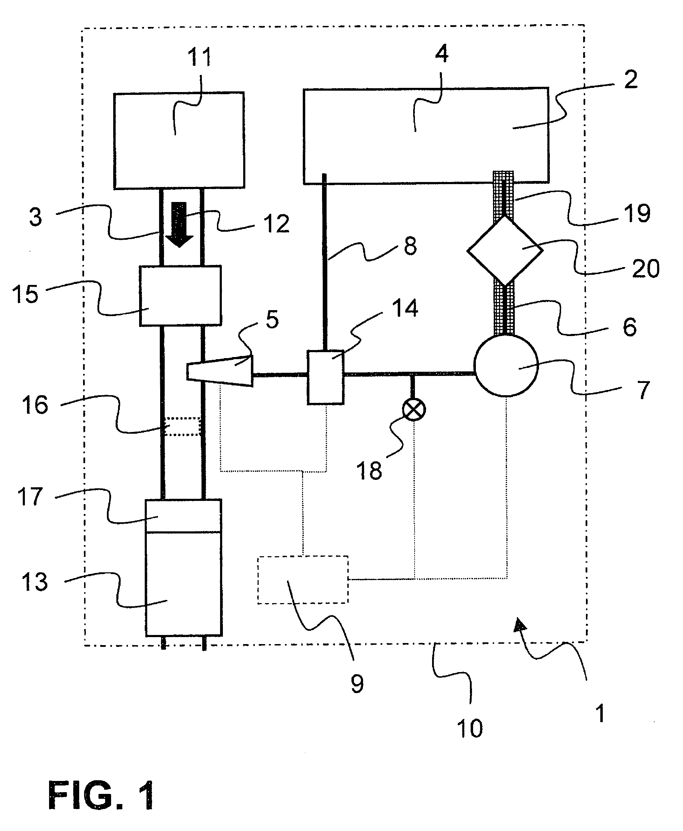

Figur 1 zeigt schematisch ein Kraftfahrzeug 10 mit einer Vorrichtung 1. Im linken Teil der Figur 1 ist die Verbrennungskraftmaschine 11, beispielsweise nach Art eines Dieselmotors, mit dem sich daran anschließenden Abgassystem 3 dargestellt. Das in der Verbrennungskraftmaschine 11 erzeugte Abgas strömt in Strömungsrichtung 12, hier beispielsweise zunächst über einen Oxidationskatalysator 15. In dem danach angeordneten Abschnitt des Abgassystems 3 ragt die Einspritzdüse 5 der Vorrichtung 1 hinein. Das dort in das Abgassystem 3 eingeleitete Reaktionsmittel wird in Folge des heißen Abgases zumindest teilweise pyrolisiert. Für eine vollständige Umsetzung des Harnstoffs kann optional ein Mischer 16 vorgesehen sein, der das heiße Abgas mit der eingespritzten Flüssigkeit weiter vermengt und somit die Pyrolyse weiter unterstützt. In Strömungsrichtung 12 danach ist nun (gegebenenfalls auch optional) ein Hydrolysekatalysator 17 vorgesehen, in dem die restlichen Hamstoff-Bestandteile in Ammoniak umgewandelt werden. Das so aufbereitete Ammoniak trifft schließlich zusammen mit dem Abgas auf den SCR-Katalysator 13, in dem die Stickoxide selektiv reduziert werden.

Auf der rechten Seite ist nun schematisch die Vorrichtung 1 dargestellt, wobei oben rechts der Tank 4 mit dem Reaktionsmittel 2 veranschaulicht ist. Als Reaktionsmittel 2 kommt insbesondere eine Harnstoff-Wasser-Lösung in Betracht. Aus dem Tank 4 führt eine Leitung 6 hin zur Einspritzdüse 5. Die Leitung 6 ist in dem Abschnitt zwischen dem Tank 4 und der Pumpe 7 mit einer Heizung 19 ausgeführt, beispielsweise einem beheizbaren Schlauch. Zwischen der Pumpe 7 und dem Tank 4 ist ein zusätzlicher Filter 20 vorgesehen, in dem gegebenenfalls Verunreinigungen aus dem Tank 4 zurückgehalten werden. Zwischen der Pumpe 7 und der Einspritzdüse 5 ist der während des Betriebs der Vorrichtung 1 regelmäßig mit erhöhtem Druck betriebene Teilabschnitt der Leitung 6 ausgebildet. Hier ist auch ein Sensor 18 zur Bestimmung des Drucks in der Leitung 6 zwischen der Einspritzdüse 5 und der Pumpe 7 vorgesehen. Ebenfalls in diesem Bereich der Leitung 6 ist ein regelbares Ventil 14 vorgesehen, mit dem das Reaktionsmittel 2 aus der Leitung 6 aus dem Abschnitt zwischen der Einspritzdüse 5 und der Pumpe 7 über eine Rückführung 8 zurück in den Tank 4 strömen kann. Das Ventil 14 wird üblicherweise zur Entspannung der Leitung 6 beim Stillstand der Vorrichtung eingesetzt, oder aber bei dem hier erfindungsgemäßen Verfahren der Kreisförderung.

Wird nun über die Steuerung 9 und den Sensor 18 festgestellt, dass in der Leitung 6, insbesondere im Abschnitt zwischen der Einspritzdüse 5 und der Pumpe 7, Gasblasen und/oder gefrorene Harnstoff-Wasser-Lösung vorliegt, wird das Ventil 14 geöffnet und es erfolgt eine Förderung von Reaktionsmittel ausgehend vom Tank 4 durch die Leitung 6 über den Filter 20 hin zur Pumpe 6, weiter zum Ventil 14 und über die Rückführung 8 wieder in den Tank 4. Bevorzugt wird diese Kreisförderung so lange durchgerührt, bis die Leitung 6 zwei bis fünf Mal durchgespült wurde. Dann wird das Ventil 14 wieder geschlossen und der gewünschte Druck vor der Einspritzdüse 5 mittels der Pumpe 7 aufgebaut. Diese Prozesse werden geregelt mit einer Steuerung 9, die folglich mit der Einspritzdüse, dem Ventil 14, dem Sensor 18 und der Pumpe 7 kommuniziert.

Es bleibt schließlich noch darauf hinzuweisen, dass Abweichungen von dem hier dargestellten System in geringem Umfang nicht aus dem hier vorgeschlagenen Betriebsverfahren herausführen. Insbesondere kann die Lage des Sensors 18, des Ventils 14 oder der Rückführung 8 abgewandelt werden, beispielsweise indem die Position zwischen der Pumpe 7 und dem Einspritzventil 5 variiert wird. Auch kann die Steuerung mit weiteren Sensoren, wie beispielsweise solche, die mit dem Tank und/oder der Verbrennungskraftmaschine zusammenwirken, kommunizieren und daraus Steuersignale für die hier angesprochene Komponente erzeugen.

Jedenfalls ist hier ein Verfahren angegeben, das den sicheren Betrieb und die genaue Bereitstellung bzw. Zudosierung von Reaktionsmittel in ein Abgassystem gewährleistet, und folglich eine geringe Schadstoffbelastung der Umgebung beim Betrieb der Kraftfahrzeuge ermöglicht.

### Bezugszeichenliste

- 1: Vorrichtung
- 2: Reaktionsmittel
- 3: Abgassystem
- 4: Tank
- 5: Einspritzdüse
- 6: Leitung
- 7: Pumpe
- 8: Rückführung
- 9: Steuerung
- 10: Kraftfahrzeug
- 11: Verbrennungskraftmaschine
- 12: Strömungsrichtung
- 13: SCR-Katalysator
- 14: Ventil
- 15: Oxidationskatalysator
- 16: Mischer
- 17: Hydrolysekatalysator
- 18: Sensor
- 19: Heizung
- 20: Filter

## Patentansprüche

1. Verfahren zum Betrieb einer Vorrichtung (1) zur Bereitstellung eines flüssigen Reaktionsmittels (2) zu einem Abgassystem (3), wobei die Vorrichtung (1) zumindest einen Tank (4) und eine Einspritzdüse (5) aufweist, die über eine Leitung (6) miteinander verbunden sind, die Leitung (6) eine Pumpe (7) zur Förderung des Reaktionsmittels (2) umfasst, zwischen der Pumpe (7) und der Einspritzdüse (5) ausgehend von der Leitung (6) hin zum Tank (4) eine regelbare Rückführung (8) vorgesehen ist und eine Steuerung (9) den Betrieb der Einspritzdüse (5), der Pumpe (7) und der Rückführung (8) kontrolliert, wobei eine Einspritzmenge aus einer Öffnungszeit der Einspritzdüse (5) und einem Druck in der Leitung (6) bestimmt wird, **dadurch gekennzeichnet, dass** zeitweise ausschließlich eine Kreisförderung des Reaktionsmittels (2) über die regelbare Rückführung (8) erfolgt und die Kreisförderung des Reaktionsmittels (2) für einen Förderzeitraum erfolgt, der mindestens dem Doppelten und höchstens dem Fünffachen der Förderzeit der Vorrichtung (1) für Reaktionsmittel (2) vom Tank (4) über die regelbare Rückführung (8) bis wieder in den Tank (4) entspricht, so dass nach dieser Kreisförderung eine im Wesentlichen gleichmäßige Dichte des Reaktionsmittel (2) in der Leitung (6) vorliegt und ein Druck vor der Einspritzdüse (5) eingestellt werden kann; wobei mit Mitteln zur Identifizierung von zumindest Gasen im Reaktionsmittel (2) eine Initiierung der Kreisförderung des Reaktionsmittels erfolgt, wobei die Mittel einen Drucksensor umfassen.

2. Verfahren nach einem der vorhergehenden Patentansprüche, bei dem mit Mitteln zur Identifizierung einer Tankzustandsgröße die Kreisförderung des Reaktionsmittels (2) bei Betriebsstart initiiert wird.

3. Verfahren nach einem der vorhergehenden Patentansprüche, bei dem die Kreisförderung des Reaktionsmittels (2) mit einer gegenüber einer Einspritzförderung erhöhten Förderleistung erfolgt.

4. Verfahren nach einem der vorhergehenden Patentansprüche, bei dem flüssige Harnstoff-Wasser-Lösung gefördert wird.

5. Kraftfahrzeug (10) mit einer Verbrennungskraftmaschine (11) und einem Abgassystem (3), in dem eine Einspritzdüse (5) für ein flüssiges Reaktionsmittel (2) in Strömungsrichtung (12) des Abgases vor einem SCR-Katalysator (13) angeordnet ist, sowie wenigstens einer Vorrichtung (1) mit zumindest folgenden Komponenten:
- ein Tank (4) für das flüssige Reaktionsmittel (2),
- eine regelbare Einspritzdüse (5),
- eine Leitung (6), die den Tank (4) und die Einspritzdüse (5) miteinander verbindet,
- eine Pumpe (7) zur Förderung des Reaktionsmittels (2) vom Tank (4) hin zur Einspritzdüse (5),
- eine mit einem Ventil (14) regelbare Rückführung (8), welche die Leitung (6) zwischen der Pumpe (7) und der Einspritzdüse (5) mit dem Tank (4) verbindet,
- eine Steuerung (9) zum kontrollierten Betrieb der Einspritzdüse (5), der Pumpe (7) und der Rückführung (8), die eingerichtet zur Durchführung eines Verfahrens nach einem der vorhergehenden Patentansprüche ist.

## Claims

1. Method for operating a device (1) for providing a liquid reactant (2) to an exhaust system (3), wherein the device (1) has at least one tank (4) and an injection nozzle (5) which are connected to one another via a line (6), the line (6) comprises a pump (7) for conveying the reactant (2), between the pump (7) and the injection nozzle (5) there is provided a controllable return line (8) from the line (6) to the tank (4), and a controller (9) controls the operation of the injection nozzle (5), the pump (7) and the return line (8), wherein the injection quantity is determined from the opening time of the injection nozzle (5) and the pressure in the line (6), **characterized in that** intermittently the reactant (2) is only circulated via the controllable return line (8) and the reactant (2) is circulated for a conveying time period which corresponds to at least two times and at most five times the time required for the device (1) to convey reactant (2) from the tank (4) via the controllable return line (8) and back into the tank (4), so that after said circulation a substantially uniform density of the reactant (2) is present in the line (6) and a desired pressure can be set upstream of the injection nozzle (5); wherein the circulation of the reactant is initiated using means for identifying at least gases in the reactant (2), wherein the means comprise a pressure sensor.

2. Method according to one of the preceding claims, in which the circulation of the reactant (2) is initiated at the start of operation using means for identifying a tank state variable.

3. Method according to one of the preceding claims, in which the reactant (2) is circulated with an increased conveying rate than when it is conveyed for an injection.

4. Method according to one of the preceding claims, in which liquid urea-water solution is conveyed.

5. Motor vehicle (10) having an internal combustion engine (11) and having an exhaust system (3) in which an injection nozzle (5) for a liquid reactant (2) is located upstream of an SCR catalytic converter (13) in the flow direction (12) of the exhaust gas, and also having at least one device (1) with at least the following components:
- a tank (4) for the liquid reactant (2),
- a controllable injection nozzle (5),
- a line (6) which connects the tank (4) and the injection nozzle (5) to one another,
- a pump (7) for conveying the reactant (2) from the tank (4) to the injection nozzle (5),
- a return line (8) which can be controlled by means of a valve (14) and which connects the line (6) between the pump (7) and the injection nozzle (5) to the tank (4),
- a controller (9) for the controlled operation of the injection nozzle (5), the pump (7) and the return line (8), which controller is set up to carry out a method according to one of the preceding claims.

## Revendications

1. Procédé destiné à l'opération d'un dispositif (1) pour la mise à disposition d'un d'agent actif liquide (2) à un système de gaz d'échappement (3), le dispositif (1) étant pourvu au moins d'un réservoir (4) et d'une buse d'injection (5) qui sont connectés l'un avec l'autre par une conduite (6), la conduite (6) comprenant une pompe (7) pour convoyer l'agent actif (2), un recyclage réglable (8), étant prévu, entre la pompe (7) et la buse d'injection (5), depuis la conduite (6) jusqu'au réservoir (4) et une commande (9) qui contrôle l'opération de la buse d'injection (5), de la pompe (7) et du recyclage (8), une quantité injectée étant déterminée d'un temps d'ouverture de la buse d'injection (5) et avec une pression dans la conduite (6), **caractérisé en ce que** périodiquement un transport circulaire de l'agent actif (2) n'est effectué uniquement par le recyclage réglable (8) et le transport circulaire de l'agent réactif (2) est effectué durant un intervalle de temps de transport, qui correspond au moins au double et maximalement au quintuple du temps de transport du dispositif (1) pour des agents actifs (2) du réservoir (4) à l'intermédiaire du recyclage réglable (8) jusqu'à nouveau dans le réservoir (4), de sorte qu'après ce transport circulaire une densité sensiblement égale de l'agent actif (2) est présente dans la conduite (6) et qu'une pression en amont de la buse d'injection (5) peut être ajustée ; dans quel cas on effectue une initiation de transport circulaire de l'agent actif avec des moyens pour identifier au moins des gaz dans l'agent actif (2), les moyens comprenant un capteur de pression.

2. Procédé selon l'une des revendications précédentes, dans lequel lors du démarrage on initie le transport circulaire de l'agent actif avec des moyens pour identifier un paramètre d'état de réservoir.

3. Procédé selon l'une des revendications précédentes, dans lequel l'agent actif (2) circulé avec un rendement de transport plus élevé que par rapport à un rendement d'injection.

4. Procédé selon l'une des revendications précédentes, dans lequel une solution liquide urée - eau est convoyée.

5. Véhicule automobile (10) avec une machine à combustion interne (11) et un système de gaz d'échappement (3), dans lequel une buse d'injection (5) pour un agent actif liquide (2) est agencée dans le sens d'écoulement (12) du gaz d'échappement en amont d'un catalyseur SCR (13) ainsi qu'au moins un dispositif (1) avec au moins les composants suivants :
- un réservoir (4) pour l'agent actif liquide (2),
- une buse d'injection réglable (5),
- une conduite (6), qui relie entre eux le réservoir (4) et la buse
- d'injection (5),
- une pompe (7) pour convoyer l'agent actif (2) depuis le réservoir (4) jusqu'à la buse d'injection (5),
- un recyclage réglable (8) avec une valve (14) qui relie la conduite (6) entre la pompe (7) et la buse d'injection (5) avec le réservoir (4),
- une commande (9) pour l'opération contrôlée de la buse d'injection (5), de la pompe (7) et du recyclage (8) qui est installée pour la mise en oeuvre d'un procédé selon l'une des revendications précédentes.
